# EUROPEAN PATENT SPECIFICATION

(11) **EP 1 714 069 B1**
(45) Date of publication and mention of the grant of the patent: **14.12.2011**
(21) Application number: 04710964.0
(22) Date of filing: 13.02.2004
(51) Int. Cl.: F16L 41/02

(54) **CONNECTING DEVICE FOR A DUCT FOR FLUID DISTRIBUTION, PARTICULARLY FOR COMPRESSED AIR DISTRIBUTION**
VERBINDUNGSANORDNUNG FÜR EINE FLÜSSIGKEITSVERTEILUNGSLEITUNG, INSBESONDERE FÜR DRUCKLUFTVERTEILUNG
DISPOSITIF DE RACCORDEMENT POUR DISTRIBUTION DES FLUIDES, EN PARTICULIER D'AIR COMPRIME

(43) Date of publication of application: 25.10.2006
(73) Proprietor: Aignep S.r.L., 25070 Bione BS (IT)
(72) Inventor: BUGATTI, Graziano, I-25065 Lumezzane S.S. (Brescia) (IT)
(74) Representative: Pulieri, Gianluca Antonio
(86) International application number: PCT/IT2004/000057
(87) International publication number: WO 2005/078332

(56) References cited:
- EP-A- 0 750 155
- DE-B- 1 116 606
- DE-U- 20 108 646
- US-A- 2 823 807

## Description

The present invention relates to a union for the distribution line of a fluid, in particular of compressed air or a low temperature fluid.

In particular, the present invention relates to a union tee, generally used in distribution lines for feeding compressed air from the compressor to the users.

Distribution lines generally comprise a main line, fed by a compressor, on which one or more secondary lines are inserted, adapted for feeding one or more users.

A known problem in the field is the build up of a liquid called "condensate", in the main line, caused by the fluid condensation.

The condensate passage in a secondary line often causes malfunctions of the user linked thereto.

The need of avoiding the condensate passage from the main line to a secondary line is therefore strongly felt. DE 201 08 646 and DE 1116 606 disclose some solutions.

Some known solutions in the field provide for the use of descending elbows, having a characteristic shape as a question mark, for linking the main line and the secondary line, realising a type of union known as "gooseneck".

However, said type of union implies several disadvantages. For example, it requires considerable space for a proper installation.

A further solution is described, for example, in document EP 0 575 225.

However, also this solution implies some disadvantages such as for example the need of perforating the pipe of the main line at the point where a secondary line should be inserted.

In yet another solution, the secondary line portion is inserted into the main line by a sleeve that arranges transversally to the section of the main line.

However, this solution exhibits the disadvantage of a considerable load loss at the union made, due to the considerable narrowing of the air flow section along the main line. A union according to the preamble of claim 1 is described in document US 2 823 807.

Object of the present invention is that of devising a union for the distribution line of a fluid, in particular compressed air, which should solve the disadvantages mentioned above and overcome the problems mentioned with reference to the prior art.

The object of the present invention is achieved by a union according to claim 1. The depending claims describe variant of embodiments.

The features and advantages of the union according to the present invention will appear more clearly from the following description of a preferred embodiment, made by way of a non-limiting example, with reference to the annexed drawings, wherein:

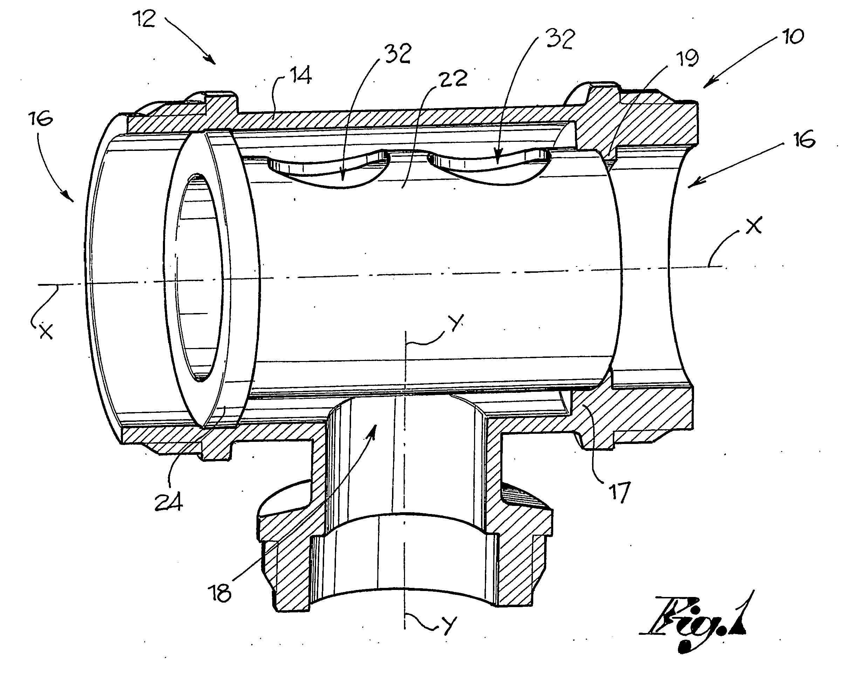

figure 1 shows a partly sectioned perspective view of a union according to the present invention;

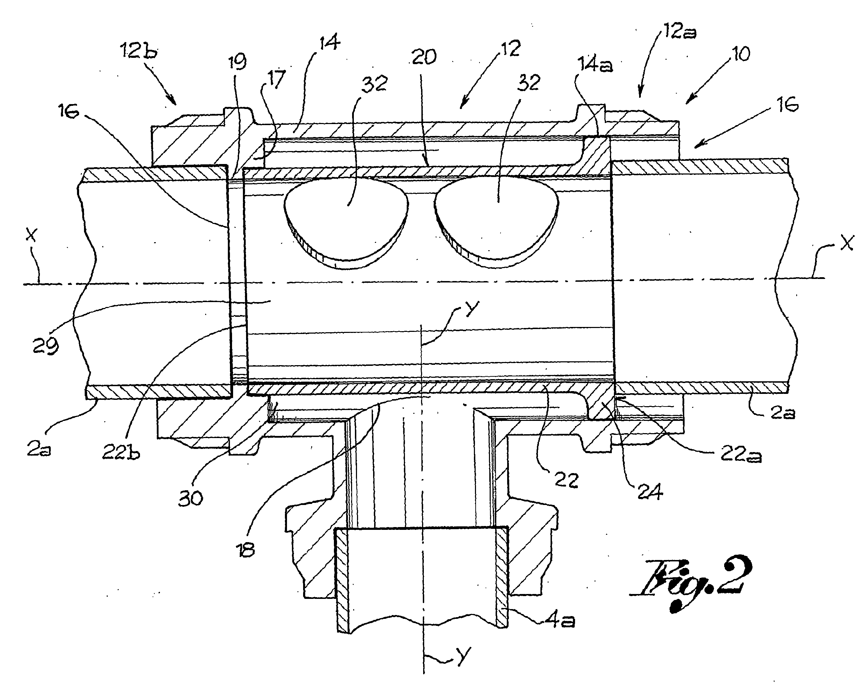

- figure 2 shows a sectioned view of the union of figure 1;

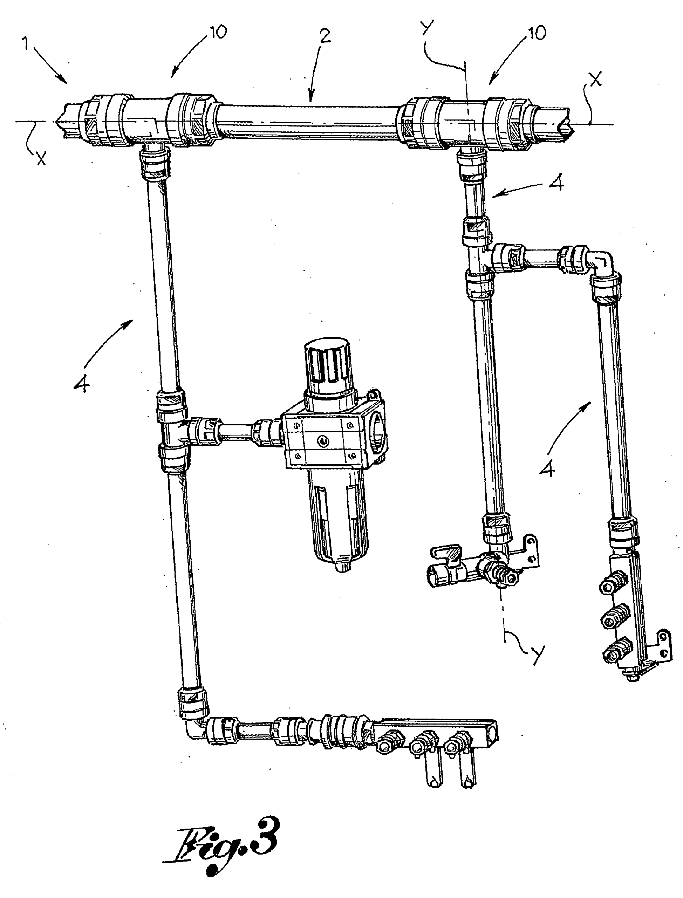

- figure 3 shows a distribution line comprising the union of figure 1.

With reference to the annexed figures, reference numeral 1 globally indicates a distribution line of a fluid, in particular compressed air or a low temperature fluid, such as argon or nitrogen.

The distribution line 1 comprises a main lines 2, generally connected, for example to a compressor, and at least one secondary line 4, derived from said main line and operatively connected to a user for the use of the compressed air.

The main line preferably extends along a substantially horizontal direction X-X and is mounted at the walls of the room where it is installed, at a fixed height, called main height, compared to the room tread surface.

The secondary lines 4 start from the main line 2, generally developing along a substantially vertical axis Y-Y and substantially perpendicular to the horizontal direction of the main line, until they reach the user arranged at a fixed height, called user height.

The main line 1 comprises at least one union 10 for the operating connection of the main line 2 with the secondary line 4.

Union 10 comprises a main hollow body 12 having prevailing extension along the horizontal axis X-X, between a first end 12a and a second end 12b.

Said main body exhibits at least one inlet 16, operatively associable to a main portion 2a of said main line 2, and at least one outlet 18, operatively associable to a secondary portion 4a of said secondary line 4.

Said main body 12 comprises an outside wall 14, preferably having substantially cylindrical shape. Said outside wall extends along said horizontal direction X-X of the main line 2.

Preferably, moreover, the outside wall 14 exhibits an inner diameter larger than the outer diameter of the main portion 2a of the main line.

Preferably, the main body 12 comprises, at the second end 12b of said main body, an inner annular projection 17, jointed to said outside wall 14. Said inner annular projection 17 exhibits an inner diameter which is smaller than the inner diameter of the outside wall 14.

Preferably, moreover, said main body 12 comprises a circumferential abutment 19, preferably jointed to said inner annular projection 17 and adapted for realising axial abutment means for the main portion 2a of the main line 2.

Moreover, union 10 comprises an intermediate body 20 adapted for being seated into the main body 12.

The intermediate body 20 comprises an intermediate wall 22, preferably with a substantially cylindrical shape, having prevailing extension along the horizontal axis X-X of the main line, between a first end 22a and a second end 22b.

Preferably, moreover, said intermediate body 20 comprises a collar 24, radially protruding outwards relative to said intermediate wall 22.

Preferably, said collar 24 is arranged axially relative to the intermediate wall 22 so as to be closer to the first end 22a of said wall rather than to the second end 22b.

The outer diameter of the intermediate wall 22 is smaller than the inner diameter of the outside wall 14 of the main body 12.

The intermediate body 20, seated into the main body 12, is kept into position by said inner annular projection 17 of the main body 12, on which the second end 22b of the intermediate wall rests 22, and by said collar 24 of the intermediate body 20, which rests onto a support portion 14a of the outside, wall 14 of the main body 12.

In other words, collar 24, the support portion 14a, the second end 22b of the intermediate wall 22 and the inner annular projection 17 realise a preferred example of means for positioning the intermediate body 20. inside the main body 12 of union 1.

Preferably, the inner diameter of the intermediate wall 22 is substantially equal to the inner diameter of the main portion 2a of the main line 2 associable to union 10.

The intermediate body 20 being seated into the main body 12, the intermediate wall 22, spaced from the outside wall 14 of the main body 12, forms an inside main chamber 29 and an intermediate chamber 30 external to said main chamber into said main body.

In other words, the main chamber 29 is adapted for being flown through by compressed air with condensate; whereas the intermediate chamber 30 is adapted for being flow through by compressed air substantially free from condensate.

The intermediate chamber 30 is adapted for placing the main line 2 of the distribution line in fluid communication with its secondary line 4.

The intermediate wall 22 exhibits at least one thorough hole 32 through which said main line 2 and said secondary line 4 are placed in communication.

Preferably, said at least one thorough hole 32 is opened on top relative to the inlet 16 of the main body 12.

The main body 12 of union 10 preferably comprises sealing connecting means of the main portion 2a of the main line 2 and of the secondary portion 4a of the secondary line 4 with union 10.

Said main body 12, moreover, is preferably associable to means for connecting the main portion 2a and the secondary portion 4a to union 10, for example of the sleeve type, called "quick joint".

In the normal use of sleeve 10, the compressed air is fed through the main portion 2a of the main line.

Holes 32 through the intermediate wall 22 of the intermediate body 20 are arranged at a higher height than the height of the bottom of the main portion 2a of the main line 2, that is, the height at which any condensate present into the main line settles by gravity.

To be fed to the user, the compressed air follows a feeding path that comprises a portion of the main chamber, on the bottom of which there is the condensate, and a portion of the intermediate chamber, it being thus fed to the secondary portion 4a of the secondary line.

On the other hand, the condensate remains on the bottom of the main chamber 29 and hence it is brought towards a drainage point of the distribution line.

In other words, the intermediate wall 22, spaced from the outside wall 14 so as to make said outlet accessible to the compressed air, overlaps the outlet 18 of said outside wall, that it, covers it, thus realising a bridge between the portion upstream of the main line relative to the union, and the portion downstream of it.

On the other hand, the compressed air, separated from the condensate by gravity, comes out of the main chamber from a point at a higher height than that of the condensate and goes to the secondary line through the intermediate chamber.

Unusually, the union according to the present invention prevents the condensate present into the main line from passing into the secondary line.

Advantageously, moreover, it exhibits a small size, since it is free from projections from the main line.

According to a further advantageous aspect, said union is directly inserted along the main line without the need of perforating said line in a fixed position of its wall to connect a union.

According to an even further advantageous aspect, said union exhibits a substantially load-loss-free operation along the main line since the main chamber along which the air with condensate passes, is free from obstacles such as collars or projections that hinder the fluid flow section.

A further advantage of the union according to the invention consists in comprising means for positioning the intermediate body adapted for realising a main chamber free from obstacles for the fluid flow, thus limiting load losses.

In other words, said positioning means are also adapted for leaving said main chamber free from obstacles for the fluid flow.

It is clear that a man skilled in the art will be able to make several changes to the union described above, all falling within the scope of protection defined by the following claims.

## Claims

1. Union (10) for a distribution line of a fluid, in particular compressed air, wherein said distribution line comprises a main line (2) and at least one secondary line (4), derived from said main line and operatively connected to at least one user, said union comprising:
- a main body (12), extending between a first end (12a) and a second end (12b) along an axis (X-X), comprising an outside wall (14) having an inlet (16) of air with condensate, operatively associable to a main portion (2a) of said main line (2), and an outlet (18) of air substantially free from condensate, placed between the first end (12a) and the second end (12b) of the main body (12) and operatively associable to a secondary portion (4a) of said secondary line (4);
- an intermediate body (20) into said main body (12), comprising an intermediate wall (22) spaced from the outside wall (14), forming an inside main chamber (29) and an external intermediate chamber (30) in fluid communication with it by at least one through hole (32) of the intermediate wall (22), wherein said intermediate wall (22) covers said outlet (18) preventing the condensate passage towards said secondary line (4) and wherein the intermediate wall (22) is supported by the main body (12) at the first end (12a) of it,
the intermediate wall (22) being also supported by the main body (12) at the second end (12b) of it,
said union being **characterized in that** the intermediate body (20) is seated into said main body (12).

2. Union according to claim 1, **characterised in that** it comprises positioning means adapted for positioning said intermediate body into said main body and adapted for leaving said main chamber (29) free from obstacles for the condensate.

3. Union according to claim 2, wherein said positioning means comprise a collar (24) of the intermediate body (20) externally protruding from said intermediate wall (22).

4. Union according to claim 2 or 3, wherein said positioning means comprise an inner annular projection (17) of said main body (12).

5. Union according to any one of the previous claims, wherein said main body (12) and said intermediate body (20) exhibit a substantially cylindrical shape.

6. Union according to any one of the previous claims, wherein said main body (12) and said intermediate body (20) are concentric.

7. Union according to any one of the preceding claims, wherein said at least one thorough hole (32) is opened on top relative to the inlet (16) of the main body (12).

8. Union according to any one of the previous claims, wherein there are comprised means for the sealed connection of the main portion (2a) and of the secondary portion (4a) with said union (10).

9. Union according to any one of the previous claims, wherein there are comprised means for the attachment of the main portion (2a) and of the secondary portion (4a) to said union (10).

10. Union according to any one of the previous claims, wherein there are further comprised axial abutment means for said main portion (2a) or said secondary portion (4a) .

11. Union according to claim 10, wherein said axial abutment means comprise a circumferential abutment (19) internally protruding from said main body (12).

12. Union according to claim 10 or 11, wherein a first end (22a) of said intermediate body (22) realises axial abutment means.

13. Distribution line (1) of compressed air comprising a union (10) according to any one of the previous claims.

14. Distribution line according to claim 13, wherein the intermediate wall (22) exhibits an inner diameter substantially equal to the inner diameter of the main portion (2a) of the main line (2).

15. Distribution line according to claim 13 or 14, wherein the secondary line (4) extends along a vertical axis (Y-Y) perpendicular to the axis (X-X) of the main line.

## Patentansprüche

1. Anordnung (10) für eine Verteilerleitung eines Fluids, insbesondere Druckluft, wobei die Verteilerleitung eine Hauptleitung (2) und wenigstens eine Sekundärleitung (4) umfasst, die von der Hauptleitung abgezweigt und mit wenigstens einem Verbraucher betriebsmäßig verbunden ist, wobei die Anordnung folgendes umfasst
- einen Hauptkörper (12), der sich zwischen einem ersten Ende (12a) und einem zweiten Ende (12b) entlang einer Achse (X-X) erstreckt und eine Außenwand (14) umfasst, die einen Einlass (16) für Luft mit Kondensat, der mit einem Hauptabschnitt (2a) der Hauptleitung (2) wirkungsmäßig verbindbar ist, und einen Auslass (18) für Luft, die im Wesentlichen frei von Kondensat ist, aufweist, wobei der Auslass (18) und zwischen dem ersten Ende (12a) und dem zweiten Ende (12b) des Hauptkörpers (12) angeordnet ist und mit einem Sekundärabschnitt (4a) der Sekundärleitung (4) wirkungsmäßig verbindbar ist,
- einen Zwischenkörper (20) in dem Hauptkörper (12), der eine von der Außenwand (14) beabstandete Zwischenwand (22) umfasst, die eine innere Hauptkammer (29) und eine äußere Zwischenkammer (30) bildet, die mit dieser durch wenigstens ein Durchgangsloch (32) der Zwischenwand (22) in Fluidverbindung steht,
wobei die Zwischenwand (22) den Auslass (18) abdeckt und den Durchtritt des Kondensates zu der Sekundärleitung (4) verhindert, und wobei die Zwischenwand (22) an ihrem ersten Ende (12a) von dem Hauptkörper (12) abgestützt ist,
wobei die Zwischenwand (22) ferner an ihrem zweiten Ende (12b) von dem Hauptkörper (12) abgestützt ist,
wobei die Anordnung **dadurch gekennzeichnet ist,**
**dass** der Zwischenkörper (20) in dem Hauptkörper (12) aufgenommen ist.

2. Anordnung gemäß Anspruch 1,
**dadurch gekennzeichnet,**
**dass** sie Positioniermittel umfasst, die zur Positionierung des Zwischenkörpers in dem Hauptkörper ausgebildet sind und die dazu angepasst sind, dass die Hauptkammer (29) frei von Hindernissen für das Kondensat ist.

3. Anordnung gemäß Anspruch 2,
wobei die Positioniermittel einen Kragen (24) des Zwischenkörpers (20) umfassen, der von der Zwischenwand (22) außen vorragt.

4. Anordnung gemäß Anspruch 2 oder 3, wobei die Positioniermittel einen ringförmigen Innenvorsprung (17) des Hauptkörpers (12) umfassen.

5. Anordnung gemäß irgend einem der vorangehenden Ansprüche, wobei der Hauptkörper (12) und der Zwischenkörper (20) eine im Wesentlichen zylindrische Form aufweisen.

6. Anordnung gemäß irgend einem der vorangehenden Ansprüche, wobei der Hauptkörper (12) und der Zwischenkörper (20) konzentrisch angeordnet sind.

7. Anordnung gemäß irgend einem der vorangehenden Ansprüche,
wobei das wenigstens eine Durchgangsloch (32) oben bezüglich des Einlasses (16) des Hauptkörpers (12) offen ist.

8. Anordnung gemäß irgend einem der vorangehenden Ansprüche,
wobei Mittel zum abgedichteten Verbinden des Hauptabschnitts (2a) und des Sekundärabschnitts (4a) mit der Verbindungsanordnung (10) vorgesehen sind.

9. Anordnung gemäß irgend einem der vorangehenden Ansprüche,
wobei Mittel zum Befestigen des Hauptabschnitts (2a) und des Sekundärabschnitts (4a) an der Verbindungsanordnung (10) vorgesehen sind.

10. Anordnung gemäß irgend einem der vorangehenden Ansprüche,
wobei ferner Axialanschlagmittel für den Hauptabschnitt (2a) oder den Sekundärabschnitt (4a) vorgesehen sind.

11. Anordnung gemäß Anspruch 10, wobei die Axialanschlagmittel einen Umfangsanschlag (19) umfassen, der von dem Hauptkörper (12) nach innen vorsteht.

12. Anordnung gemäß Anspruch 10 oder 11, wobei ein erstes Ende (22a) des Zwischenkörpers (22) Axialanschlagmittel vorsieht.

13. Verteilerleitung (1) für Druckluft, umfassend eine Anordnung (10) gemäß irgend einem der vorangehenden Ansprüche.

14. Verteilerleitung gemäß Anspruch 13, wobei die Zwischenwand (22) einen Innendurchmesser aufweist, der im Wesentlichen gleich dem Innendurchmesser des Hauptabschnitts (2a) der Hauptleitung (2) ist.

15. Verteilerleitung gemäß Anspruch 13 oder 14,
wobei die Sekundärleitung (4) sich entlang einer Vertikalachse (Y-Y) erstreckt, die zu der Achse (X-X) der Hauptleitung rechtwinklig angeordnet ist.

## Revendications

1. Raccord union (10) destiné à une canalisation de distribution d'un fluide, en particulier d'air comprimé, dans lequel ladite canalisation de distribution comprend une canalisation principale (2) et au moins une canalisation secondaire (4), dérivée de ladite canalisation princi-pale et connectée de manière opérationnelle à un utilisateur au moins, ledit raccord union comprenant :
- un corps principal (12), qui s'étend entre une première extrémité (12a) et une seconde extrémité (12b) le long d'un axe (X - X), comprenant une paroi extérieure (14) qui présente une entrée (16) d'air avec un condensat, pouvant être associée de manière opérationnelle à une partie principale (2a) de ladite canalisation princi-pale (2), et une sortie (18) d'air sensiblement exempte de condensat, placée entre la première extrémité (12a) et la seconde extrémité (12b) du corps principal (12) et pouvant être associée de manière opérationnelle à une partie secondaire (4a) de ladite canalisation secondaire (4) ;
- un corps intermédiaire (20) dans ledit corps principal (12), com-prenant une paroi intermédiaire (22) espacée de ladite paroi extérieure (14), en formant une chambre principale intérieure (29) et une chambre intermédiaire extérieure (30) en communication de fluide avec elle grâce à au moins un trou traversant (32) de la paroi intermédiaire (22), dans lequel ladite paroi intermédiaire (22) couvre ladite sortie (18) en empêchant le passage du conden-sat vers ladite canalisation secondaire (4) et dans lequel la paroi intermédiaire (22) est supportée par le corps principal (12) au niveau de la première extrémité (12a) de celui-ci ;
la paroi intermédiaire (22) étant également supportée par le corps principal (12) au niveau de la seconde extrémité (12b) de celui-ci ;
ledit raccord union étant **caractérisé en ce que** le corps intermédiaire (20) est placé dans ledit corps principal (12).

2. Raccord union selon la revendication 1, **caractérisé en ce qu'**il comprend des moyens de positionnement adaptés pour positionner ledit corps intermédiaire dans ledit corps principal et adaptés pour laisser ladite chambre principale (29) exempte d'obstacles pour le condensat.

3. Raccord union selon la revendication 2, dans lequel lesdits moyens de positionnement comprennent un collier (24) du corps intermé-diaire (20) qui fait saillie de manière extérieure à partir de ladite paroi intermédiaire (22).

4. Raccord union selon la revendication 2 ou la revendication 3, dans lequel lesdits moyens de positionnement comprennent une saillie annulaire intérieure (17) dudit corps principal (12).

5. Raccord union selon l'une quelconque des revendications précé-dentes, dans lequel ledit corps principal (12) et ledit corps intermé-diaire (20) présentent une forme sensiblement cylindrique.

6. Raccord union selon l'une quelconque des revendications précé-dentes, dans lequel ledit corps principal (12) et ledit corps intermédiaire (20) sont concentriques.

7. Raccord union selon l'une quelconque des revendications précé-dentes, dans lequel ledit ou lesdits trous traversants (32) sont ouverts sur le dessus par rapport à l'entrée (16) du corps principal (12).

8. Raccord union selon l'une quelconque des revendications précé-dentes, dans lequel il y a des moyens destinés à une connexion étanche de la partie principale (2a) et de la partie secondaire (4a) avec ledit raccord union (10).

9. Raccord union selon l'une quelconque des revendications précé-dentes, dans lequel il y a des moyens destinés à la fixation de la partie principale (2a) et de la partie secondaire (4a) sur ledit raccord union (10).

10. Raccord union selon l'une quelconque des revendications précé-dentes, dans lequel il y a également des moyens de butée axiale pour ladite partie principale (2a) ou ladite partie secondaire (4a).

11. Raccord union selon la revendication 10, dans lequel lesdits moyens de butée axiale comprennent une butée circonférentielle (19) qui fait saillie de manière intérieure à partir dudit corps principal (12).

12. Raccord union selon la revendication 10 ou la revendication 11, dans lequel une première extrémité (22a) dudit corps intermédiaire (22) réalise les moyens de butée axiale.

13. Canalisation de distribution (1) d'air comprimé comprenant un raccord union (10) selon l'une quelconque des revendications précédentes.

14. Canalisation de distribution selon la revendication 13, dans laquelle la paroi intermédiaire (22) présente un diamètre intérieur sensiblement égal au diamètre intérieur de la partie principale (2a) de la canalisation principale (2).

15. Canalisation de distribution selon la revendication 13 ou la revendication 14, dans laquelle la canalisation secondaire (4) s'étend le long d'un axe vertical (Y - Y) perpendiculaire à l'axe (X - X) de la canalisation principale.
